# EUROPÄISCHE PATENTSCHRIFT

(11) **EP 1 468 344 B1**
(45) Veröffentlichungstag und Bekanntmachung des Hinweises auf die Patenterteilung: **07.06.2006**
(21) Anmeldenummer: 03700805.9
(22) Anmeldetag: 10.01.2003
(51) Int. Cl.: G05D 23/00

(54) **HEIZVORRICHTUNG MIT FLEXIBLEM HEIZKÖRPER**
HEATING DEVICE COMPRISING A FLEXIBLE HEATING ELEMENT
DISPOSITIF DE CHAUFFAGE POURVU D'UN CORPS DE CHAUFFE FLEXIBLE

(30) Priorität: 12.01.2002 DE 10200974
(43) Veröffentlichungstag der Anmeldung: 20.10.2004
(73) Patentinhaber: Beurer GmbH & Co., 89077 Ulm (DE)
(72) Erfinder: MERK, Ernst, 89264 Weissenhorn (DE); KÖHLER, Ralf, 89129 Langenau (DE)
(74) Vertreter: Fleck, Hermann-Joseph
(86) Internationale Anmeldenummer: PCT/EP2003/000178
(87) Internationale Veröffentlichungsnummer: WO 2003/058365

(56) Entgegenhaltungen:
- EP-A- 0 562 850
- US-A- 5 770 836
- US-B1- 6 222 162
- US-B1- 6 433 313

## Beschreibung

Die Erfindung bezieht sich auf eine Heizvorrichtung mit einer in einem flexiblen Heizkörper integrierten und über ein Anschlusskabel an eine Versorgungsspannung anschließbaren elektrischen Heizleiteranordnung, einem mit dieser und weiteren Elementen einschließlich einem Steuerglied für einen Heizstrom gebildeten Heizkreis und mit einer zum Variieren des Heizstromes und Regeln der Temperatur an das Steuerglied angeschlossenen Ansteuerschaltung mit Regelkreis, wobei die Ansteuerung des Steuergliedes in Abhängigkeit einer Abweichung zwischen einem Istwert und einem Sollwert erfolgt, wobei die Ansteuerschaltung des Weiteren zum Abgreifen einer von der Temperatur der Heizleiteranordnung abhängigen elektrischen Messgröße - Strom oder Spannung - über einen Koppelzweig an den Heizkreis gekoppelt ist und der Regelkreis eine Digitalisierstufe einer digitalen Schaltungsanordnung aufweist und wobei die Ansteuerschaltung derart ausgebildet ist, dass die Ansteuerung des Steuergliedes zum Einregeln einer eingestellten Temperatur des Heizkörpers auf der Grundlage von in der Digitalisierstufe gebildeten digitalen Daten erfolgt.

Eine Heizvorrichtung dieser Art ist in der US 6,222,162 angegeben. Bei dieser bekannten Heizvorrichtung mit einem flexiblen Heizkörper und darin eingebetteter Heizleiteranordnung ist in einem Heizkreis ein Steuerglied beispielsweise in Form eines Triacs vorhanden, der zum Regeln der Temperatur des Heizkörpers über einen Regelkreis angesteuert wird. Der Regelkreis ist dabei an einen in dem Heizkreis liegenden Widerstand angeschlossen, um eine darüber in Folge des Heizstromes abfallende Spannung abzugreifen und zu digitalisieren.

Eine weitere Heizvorrichtung ist in der EP 0 562 850 A2 angegeben, wobei es insbesondere um eine Schaltung zum Schutz der in dem flexiblen Heizkörper integrierten elektrischen Heizleiteranordnung vor einer Übertemperafur geht. Des Weiteren weist die dabei vorgesehene Ansteuerschaltung auch eine Temperaturregelschaltung auf, mit der für die Aufrechterhaltung einer gewünschten Temperatur ein Heizstrom über ein Steuerglied in Form eines Thyristors z.B. mittels Phasenanschnittsteuerung variiert wird. Auch andere Ausführungsarten des Steuerglieds, beispielsweise ein mechanischer, thermischer oder anderer elektronischer Schalter sind genannt. Nähere Angaben zum Aufbau einer Regelschaltung an sich sind jedoch nicht gemacht.

Der Erfindung liegt die Aufgabe zugrunde, eine Heizvorrichtung der eingangs genannten Art bereitzustellen, bei der mit dem Regelkreis Störungen möglichst weitgehend vermieden werden.

Diese Aufgabe wird mit den Merkmalen des Anspruches 1 gelöst. Hiernach ist vorgesehen, dass die Messgröße über einen Zuführzweig der Digitalisierstufe zum Bilden eines digitalen Istwertes mittelbar über ein der Digitalisierstufe vorgeschaltetes analoges Zeitglied mit einer Widerstands-/Kondensatorschaltung zugeführt ist.

Mit diesen Maßnahmen lassen sich vorteilhaft Störeinflüsse der abgegriffenen Messgröße unterdrücken und in vorteilhafter Weise genaue digitale Istwerte erreichen.

Die Ansteuerschaltung mit dem Regelkreis, der eine Digitalisierstufe aufweist und bei der die Einregelung der eingestellten Temperatur auf der Grundlage der gebildeten digitalen Daten erfolgt, ermöglicht eine genaue und sichere Temperaturregelung, die auch nach unterschiedlichen Anforderungen, beispielsweise nach Art und Geschwindigkeit der Einregelung der Temperatur oder in Abhängigkeit von der Art des flexiblen Heizkörpers (z.B. Decke oder Kissen oder Wärmeunterbett) ohne Schwierigkeit geeignet ausgelegt werden kann. Die digitale Schaltungsanordnung ist dabei vorzugsweise ein Mikrocontroller, kann beispielsweise aber auch eine speziell aufgebaute digitale Schaltungsanordnung sein, wie etwa ein ASIC, ein CMOS-Gatter oder dgl.

Hierbei ist auch eine drahtlose Strecke zum Übertragen der Messgröße denkbar.

Zum Bilden des Istwertes ist vorteilhaft vorgesehen, dass die Messgröße mittels eines im Heizkreis gebildeten Spannungsteilers abgegriffen ist, der einerseits mit der einen temperaturabhängigen Widerstand bildenden Heizleiteranordnung und andererseits mit mindestens einem Widerstandselement gebildet ist. Die ohnehin vorhandene Heizleiteranordnung wird dabei auch als Temperatursensor genutzt.

Ein günstiger Aufbau der Ansteuerschaltung, insbesondere des Regelkreises, ergibt sich dadurch, dass die Digitalisierstufe zum Bilden des digitalen Istwertes ein Zeitmessglied aufweist und der digitale Istwert einem Istzeitwert bis zum Erreichen einer vorgegebenen oder vorgebbaren Ladespannung des Kondensators entspricht, dass in der Digitalisierstufe als Sollwert ein Sollzeitwert vorgegeben oder vorgebbar ist, und dass zum Heizen die Ansteuerung des Steuerglieds in Abhängigkeit von einer Abweichung des Istzeitwertes von dem Sollzeitwert erfolgt.

Dabei bestehen weitere vorteilhafte Maßnahmen darin, dass der Kondensator mit seinem einen Anschluss über einen Ladewiderstand an einen Pol der Versorgungsspannung und mit seinem anderen Anschluss über den Koppelzweig an den Heizkreis gekoppelt ist und dass zum Erfassen der Messgröße und Bilden des Istwertes das Steuerglied mittels der digitalen Schaltungsanordnung angesteuert ist.

Ist vorgesehen, dass der Kondensator über einen Gleichrichter an die Versorgungsspannung angeschlossen ist, so können beispielsweise bei einer Netz-Versorgungsspannung Halbwellen für eine Triggerung und Bildung der Istwerte und/oder Sollwerte günstig genutzt werden.

Eine weitere vorteilhafte Ausgestaltung für den Aufbau und die Durchführung der Regelung besteht darin, dass zum Bilden des Sollwertes das Steuerglied in seinen den Heizkreis unterbrechenden nicht angesteuerten Zustand gebracht ist und der andere Anschluss des Kondensators zum Abgreifen einer entsprechend einer gewünschten Temperatur einstellbaren Teilspannung und zum Bilden des Sollwertes aus dieser an einen weiteren Spannungsteiler angeschlossen ist.

Dabei lassen sich einzelne Zeitabschnitte der Steuerung eindeutig dadurch untergliedern, dass der Abgriff der Teilspannung mittels eines zeitweilig über die digitale Schaltungsanordnung angesteuerten Schaltglieds erfolgt und dass der gebildete Sollwert und/oder der gebildete Istwert zum Durchführen eines Soll-/Istwertvergleichs in der digitalen Schaltungsanordnung abgespeichert wird/ werden.

Die Zuverlässigkeit und Genauigkeit der Temperaturregelung wird dadurch unterstützt, dass die digitale Schaltungsanordnung zum Erzeugen eines Referenzwertes als gemeinsame Bezugsgröße für den Sollwert und den Istwert ausgebildet ist. Mit dieser Maßnahme lassen sich beispielsweise mittels entsprechender Programme in der digitalen Schaltungsanordnung, insbesondere einem Mikrocontroller oder einem Mikrorechner, auch Fehler nach Art und/oder Ort erkennen, bzw. auch geeignete Korrekturwerte einrechnen.

Eine vorteilhafte Ausgestaltung für einen einfachen, sicher funktionierenden Aufbau besteht dabei darin, dass zum Bilden des Referenzwertes das Steuerglied und das Schaltglied in ihren Unterbrechungszustand gebracht sind und der über den einen und anderen Anschluss mit der digitalen Schaltungsanordnung verbundene Kondensator mittels dieser zur Durchführung der Referenzmessung entladbar ist und anschließend über den Ladezweig, den Koppelzweig und das Widerstandselement des Heizkreises geladen wird und dabei die bis zum Erreichen der Ladespannung des Kondensators mit dem Zeitmessglied der digitalen Schaltungsanordnung gemessene Zeit als Referenzwert gespeichert wird. Hierbei wird das Zeitglied aus der Widerstands-/Kondensatorschaltung nicht nur für die Bildung des Istwertes und des Sollwertes, sondern auch für die Bildung des Referenzwertes genutzt, wodurch sich eine erhöhte Zuverlässigkeit ergibt.

Ein für die Durchführung der Temperaturregelung vorteilhafter Aufbau besteht darin, dass die digitale Schaltungsanordnung derart ausgebildet ist, dass zur Temperaturregelung zunächst der Referenzwert während einer Versorgungshalbwelle ermittelt und anschließend während jeweils weiterer Halbwellen der Sollwert und der Istwert bestimmt und aufgrund des Vergleichs von Sollwert und Istwert die Temperatur eingeregelt wird und nach einer Pausenzeit, in der die Ansteuerung des Steuerglieds unterbrochen ist, die genannten Schritte von der Referenzwertbildung bis zur Pausenzeit zyklisch wiederholt werden.

Die Erfindung wird nachfolgend anhand von Ausführungsbeispielen unter Bezugnahme auf die Zeichnungen näher erläutert. Es zeigen:
- Fig. 1: eine schematische Darstellung einer elektrischen Schaltung einer Heizvorrichtung und
- Fig. 2: Spannungsverläufe eines Zeitglieds, aufgetragen über der Zeit zum Herleiten eines Istwertes, Sollwertes und Referenzwertes.

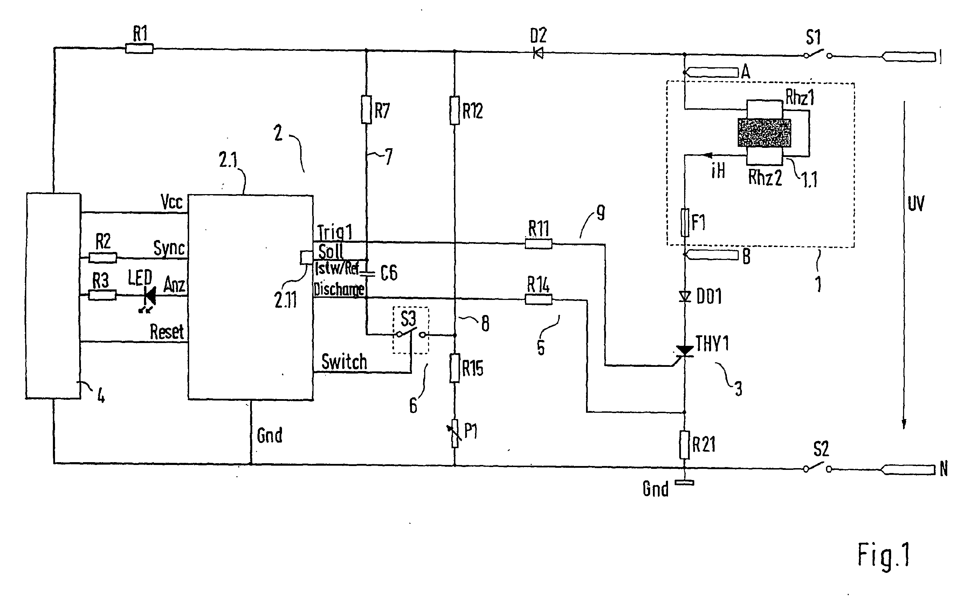

In Fig. 1 ist eine Heizvorrichtung mit einem flexiblen Heizkörper 1 gezeigt, z.B. in Form einer Heizdecke, eines Heizkissens oder Wärmeunterbetts, in dem eine Heizleiteranordnung integriert und eine Schmelzsicherung F1 untergebracht sind, und mit einer auf einen Heizkreis 3 einwirkenden Ansteuerschaltung 2, mit der ein durch den Heizkreis 3 mit der Heizleiteranordnung 1.1 fließender Heizstrom iH zum Einregeln einer gewünschten Temperatur variierbar ist.

Der an eine Versorgungsspannung UV, beispielsweise eine Netzspannung, eine andere transformierte Spannung oder eine Gleichspannung, angeschlossene und mittels Schalter S1, S2 von dieser trennbare Heizkreis 3 weist im Anschluss an die Heizleiteranordnung 1.1 und die Schmelzsicherung F1 eine für eine positive Halbwelle in Durchlassrichtung angeschlossene Diode, ein Steuerglied THY1 in Form eines Thyristors oder Triacs oder anderen Halbleiterschalters oder elektronisch betätigbaren mechanischen Kontakts sowie einen Spannungsteilerwiderstand R21 auf, der mit seinem von dem Steuerglied THY1 abgelegenen Anschluss an Masse liegt und mit der Heizleiteranordnung 1.1 einen Spannungsteiler bildet. Die Heizleiter Rhz1, Rhz2 der Heizleiteranordnung 1.1 sind vorzugsweise mittels eines bei einer geeigneten Temperatur schmelzenden Isolators voneinander isoliert und als Innenleiter und Außenleiter einer Heizkordel miteinander verbunden, wie an sich bekannt, wodurch auch eine Kompensation des elektromagnetischen Feldes erreicht wird. Die Heizleiteranordnung 1.1 ist an z.B. zwei Anschlusspunkten A, B im Randbereich des flexiblen Heizkörpers 1 oder an einem kurzen Kabelstück mit einer Stecker-/Kupplungseinheit von dem Heizkreis 3 lösbar angekoppelt oder aber über diese mit festen Anschlusskabeln verbunden. Die Schmelzsicherung F1 kann auch außerhalb des flexiblen Heizkörpers 1 in dem Heizkreis 3, beispielsweise der Stecker-/Kupplungseinheit angeordnet sein. Die Heizleiter Rhz1, Rhz2 besitzen einen temperaturabhängigen Widerstand, beispielsweise mit einem positiven Temperaturkoeffizienten (PTC-Effekt) oder negativen Temperaturkoeffizienten (NTC-Effekt), so dass der zusammen mit dem Spannungsteilerwiderstand R21 gebildete Spannungsteiler temperaturabhängig ist. Mehrere Heizkreise 3 können parallel oder in Serie vorgesehen sein, wobei in dem Heizkörper 1 entsprechend mehrere Heizkordeln angeordnet sind.

Die Ansteuerschaltung 2 ist über einen Koppelzweig 5 zum Abgriff der mittels des Spannungsteilers aus dem Spannungsteilerwiderstand R21 und der Heizleiteranordnung 1.1 gebildeten Teilspannung sowie über einen Ansteuerzweig 9 an einen Steuereingang des Steuerglieds THY1 angeschlossen und weist eine über eine Energieversorgung 4 versorgte digitale Schaltungsanordnung 2.1, die beispielsweise als Mikrorechner, Mikrocontroller, spezielle integrierte Schaltungsanordnung (ASIC), CMOS-Gatter oder dgl. ausgebildet ist, sowie ferner ein in einem Ladezweig 7 und Sollwertzweig 6 eingebundenes Zeitglied aus einer Widerstand-/Kondensatorschaltung R7, C6 und einen an der Versorgungsspannung UV liegenden weiteren Spannungsteiler 8 mit festen Widerständen R12, R15 und einem einstellbaren Widerstand P1 auf, wobei in dem positiven Potentialanschluss zu der Versorgungsspannung UV eine weitere Diode D2 in Durchlassrichtung eingefügt ist. Dabei ist die weitere Diode D2 so angeordnet, dass die gesamte Ansteuerschaltung 2 über diese an die Versorgungsspannung UV angeschlossen ist.

An dem weiteren Spannungsteiler 8 ist zwischen den beiden festen Widerständen R12, R15 zum Bilden des Sollwertzweiges 6 eine mit dem einstellbaren Widerstand in Form des Potentiometers P1 einstellbare Teilspannung abgegriffen, die entsprechend einer gewünschten Temperatur des Heizkörpers 1 wählbar ist. Das Potentiometer P1 liegt dabei zwischen dem masseseitigen festen Widerstand R15 und Masse Gnd. Die an dem weiteren Spannungsteiler 8 abgegriffene Teilspannung wird über einen an die digitale Schaltungsanordnung 2.1 zum Öffnen und Schließen an einen Anschluss Switch angeschlossenen steuerbaren Schalter S3 an den Kondensator C6 angelegt. Der Kondensator C6 ist damit mit seinem einen Anschluss über den Lade-Widerstand R7 zum Aufladen an den positiven Pol der Versorgungsspannung UV und mit seinem anderen Anschluss über den steuerbaren Schalter S3 und den festen Widerstand R15 und das Potentiometer P1 zum Bilden des Sollwertzweiges 6 an Masse angeschlossen, wobei der Sollwertzweig 6 zum Bilden eines Sollwerts zeitweilig mittels des steuerbaren Schalters S3 entsprechend einem in der digitalen Schaltungsanordnung 2.1 festgelegten Ansteueralgorithmus geschlossen werden kann. Der mit dem Lade-Widerstand R7 verbundene Anschluss des Kondensators C6 ist zudem mit einem Eingangsanschluss der digitalen Schaltungsanordnung 2.1 zum Erfassen der Ladespannung und Zuführen zu einer Digitalisierstufe 2.11 verbunden, während der andere Anschluss des Kondensators C6 vorzugsweise an einen Entladeanschluss (Discharge) der digitalen Schaltungsanordnung 2.1 angeschlossen ist, um eine gesteuerte vollständige Entladung des Kondensators C6 vorzunehmen. Zudem ist dieser andere Anschluss des Kondensators C6 über den Koppelzweig 5 mit einem Widerstand R14 zum Abgreifen der Teilspannung an dem Widerstand R21 des Heizkreises 3, d.h. einer aktuellen Messgröße in Abhängigkeit der Temperatur der Heizleiteranordnung 1.1 und damit des Heizkörpers 1 angeschlossen, wobei der Anschlusspunkt in dem Heizkreis 3 zwischen dem Steuerglied THY1 und dem Spannungsteilerwiderstand R21 liegt. Der Ansteuerzweig 9 enthält einen Widerstand R11 und ist an einen Steueranschluss Trig1 der digitalen Schaltungsanordnung 2.1 angeschlossen, um eine Temperaturregelung des Heizkörpers 1 in Abhängigkeit von einem Sollwert/lstwertvergleich vorzunehmen, wobei mittels der digitalen Schaltungsanordnung 2.1 geeignete Regelalgorithmen vorgegeben bzw. programmiert werden können.

Alternativ kann der Entladeanschluss Discharge auch entfallen. Anstelle Teilspannungen über die Widerstände R7 und R12 zu erzeugen, können auch entsprechende vom Lastkreis (Heizung) getrennte Gleichspannungen angelegt werden, so dass die Widerstände R7 und R12 eingespart werden. Weiterhin können verschiedene Sollwerte auch in der digitalen Schaltungsanordnung vorgegeben und über zugeordnete Anschlüsse abgegriffen werden, die mittels Umschalter geeignet kontaktiert werden können. Dadurch lassen sich die Widerstände R12, R15, P1 und der Schalter S3 ersetzen. Die Vorgabe des Sollwertes erfolgt dann nicht über den veränderten Widerstand P1, sondern mittels Umschalter. Beispielsweise kann dafür ein temperaturstabilierter Zeittakt oder eine Referenzzeit in der digitalen Schaltungsanordnung 2.1 vorgesehen werden.

Die digitale Schaltungsanordnung 2.1 ist andererseits über einen Anschluss Vcc an die Energieversorgung 4 und mittels eines Masseanschlusses Gnd an Massepotential gelegt. Zudem bestehen über einen Synchronisieranschluss Sync, einen Anzeigeanschluss Anz sowie einen Rücksetzanschluss Reset weitere Verbindungen der digitalen Schaltungsanordnung 2.1 mit der Energieversorgung 4, wobei an dem Synchronisieranschluss Sync ein Widerstand R2 und an den Anzeigeanschluss Anz eine Anzeige, beispielhaft in Form einer Leuchtdiodenanzeige LED sowie eine Widerstandsanordnung R3 angeschlossen sind. Die Energieversorgung 4 ihrerseits liegt einerseits an Masse und andererseits über einen Widerstand R1 und die weitere Diode D2 an der Versorgungsspannung UV.

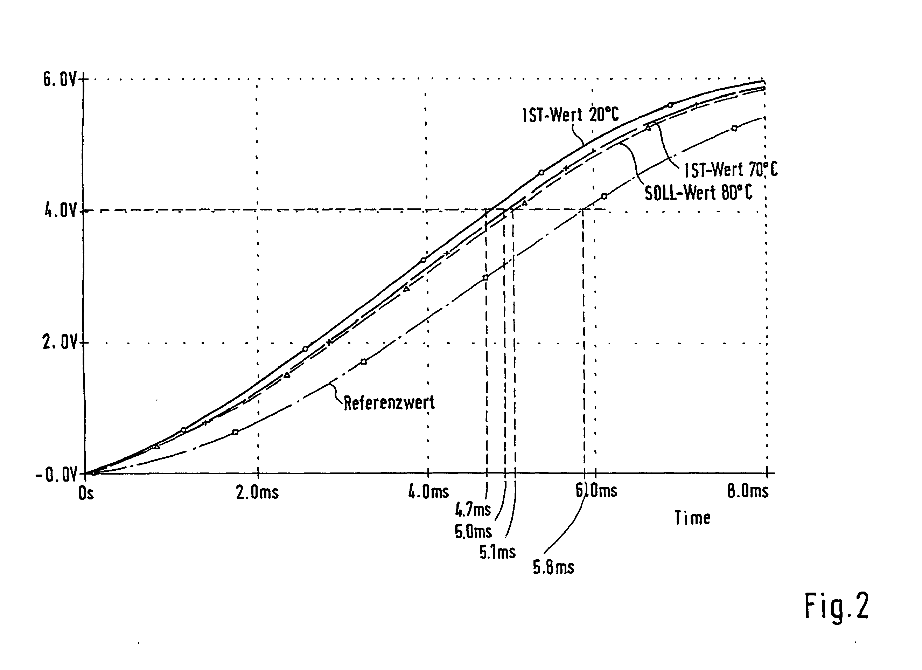

Im Folgenden wird die Vorgehensweise bei der Temperaturregelung anhand der in Fig. 1 gezeigten Heizvorrichtung und von in Fig. 2 gezeigten Ladekurven des Kondensators C6 näher erläutert, aus denen ein Referenzwert, der Istwert bei verschiedenen Temperaturen der Heizleiteranordnung 1.1 und der Sollwert hergeleitet werden. Der Referenzwert, der Sollwert und der Istwert werden jeweils aus den Ladekurven des Kondensators C6 bei unterschiedlichen Beschaltungen bestimmt, die mittels der digitalen Schaltungsanordnung 2.1 gesteuert werden, wobei die Ladezeiten des Kondensators C6 auf eine bestimmte Ladespannung mittels einer in der digitalen Schaltungsanordnung 2.1 vorgesehenen Digitalisierstufe 2.11 bestimmt werden. In der digitalen Schaltungsanordnung 2.1 ist ein digitales Zeitmessglied mit einem festen Zeittakt und einem Zähler vorgesehen. Durch den Vergleich des Istwertes in Form eines Istzeitwertes und des Sollwertes in Form eines Sollzeitwertes wird über die Zuführung des Heizstromes iH mittels des Steuergliedes THY1, d.h. über Heizen oder Nichtheizen entschieden.

Mit den vorliegenden Maßnahmen zum Bilden des Istwertes und des Sollwertes werden große Versorgungsspannungsbereiche von etwa 100V bis 250V und auch Frequenzbereiche üblicher Netzversorgungsspannungen von etwa 50 bis 60 Hz auf einfache Weise abgedeckt, wobei die übliche Auflösung der Digitalisierstufe 2.11 bzw. des digitalen Zeitmessgliedes ausreichend ist, aber auch leicht vergrößert werden kann, falls erwünscht. Die Erhöhung der Auflösung kann dabei durch einfache Erhöhung der Taktfrequenz, z.B. automatisch, bei entsprechender Umschaltung der Versorgungsspannung erfolgen. Beispielsweise kann dies in Abhängigkeit von dem dynamischen Referenzwert im Speicher der digitalen Schaltungsanordnung 2.1 erfolgen, der sich nach der Versorgungsspannung richtet.

Für die Ermittlung des Referenzwertes wird vorliegend beispielsweise während einer negativen Halbwelle der Versorgungsspannung UV, die beispielsweise die Netzspannung ist, der Kondensator C6 über die Anschlüsse Istw/Ref und Discharge vollständig entladen. Während der Referenzmessung sind der steuerbare Schalter S3 und der Lastschalter in Form des Steuerglieds THY1 nicht angesteuert, d.h. offen. Über den Synchronisieranschluss Sync wird ein Nullspannungsdurchgang jeder positiven Halbwelle erfasst und nach dem Nulldurchgang beginnt der Aufladevorgang des Kondensators C6 in Abhängigkeit von den Widerständen R7, R14, R21 und der weiteren Diode D2, bis ein digitaler Schaltpegel an dem Referenzeingang der digitalen Schaltungsanordnung 2.1 erreicht ist. Bei 50 Hz Netzfrequenz beträgt die Ladezeit nach Fig. 2 z.B. 5,8 ms, die den Referenzwert bildet.

Zum Bilden des Istwertes wird der gesteuerte Schalter S3 nicht angesteuert, bleibt also offen, wogegen das Steuerglied THY1 angesteuert, d.h. der Heizkreis 3 geschlossen ist. Bedingt durch den Stromfluss über die von den Heizleitern gebildeten Heizwiderstände Rhz1 und Rhz2, die Schmelzsicherung F1, die Diode D01, das Steuerglied THY1 und den Spannungsteilerwiderstand R21 entsteht ein temperaturproportionaler Spannungsabfall U21 an dem Spannungsteilerwiderstand R21. Beispielsweise beträgt die Teilspannung in Form des Spannungsabfalls U21 bei 20° C Heizleitertemperatur ca. 1 V (Spitze der positiven Sinushalbwelle) und bei maximaler Temperatur (80° C) ca. 0,7 V. Bedingt durch den parallelen Anstieg der positiven Ladespannung an dem Ladewiderstand R7 und die Anhebung mittels der Teilspannung U21 verkürzt sich der Ladevorgang an dem Kondensator C6 bis zum Erreichen des Schaltpegels auf eine Ladezeit bzw. einen Istzeitwert von ca. 4,7 ms bei 20° C. Ändert sich durch die Erwärmung der Heizleiteranordnung 1.1 auf 70° C infolge des PTC-Effektes die Teilspannung U21 auf ca. 0,75 V im Maximum der Sinushalbwelle, so erfolgt der Ladevorgang des Kondensators C6 in ca. 5,0 ms.

Zur Bildung des Sollwertes in Form des Sollzeitwertes wird bei nicht angesteuertem Steuerglied, d.h. bei offenem Heizkreis 3 und eingeschaltetem, d.h. geschlossenem steuerbaren Schalter S3 die Ladespannung des Kondensators C6 bei maximaler Temperatureinstellung (80° C) durch das Potentiometer P1 um ca. 0,7 V (Maximum der positiven Sinushalbwelle) angehoben. Dies entspricht der Teilspannung U21 bei maximaler Temperatur. Das ergibt an dem Kondensator C6 eine Ladezeit bis zum Schaltpegel von 5,1 ms (Sollzeitwert bei 80° C). Der Sollwertzweig 6 ergibt sich dabei durch die Bauteile weitere Diode D2, Widerstand R7, Kondensator C6, steuerbarer Schalter S3, Widerstand R15 und einstellbarer Widerstand P1 in Verbindung mit dem Widerstand R12 des weiteren Spannungsteilers 8, wobei der steuerbare Schalter S3 mittels der digitalen Schaltungsanordnung 2.1 über den Anschluss Switch angesteuert ist.

Beim Ablauf der Temperaturregelung wird zunächst der Referenzwert ermittelt, danach werden der Sollwert und der Istwert als Sollzeitwert und Istzeitwert bestimmt. Durch den Vergleich der Ladezeiten an dem Kondensator C6, der aufgrund der hergeleiteten digitalen Daten des Istzeitwertes und des Sollzeitwertes durchgeführt wird, wird dann über Heizen oder Nichtheizen entschieden. Bei Erreichen der Maximaltemperatur ergeben sich gleiche Ladezeiten an dem Kondensator C6 (wobei die Teilspannung U21 0,7 V beträgt), d.h. vorliegend 5,1 ms. Daraufhin wird die Ansteuerung des Steuergliedes THY1 unterbrochen und eine Pausenzeit von ca. 1 s eingefügt. Danach werden jeweils der Referenz-, Soll- und Istwert innerhalb von 3 Netzhalbwellen ermittelt. Durch einen weiteren Vergleich wird wieder über Heizen oder Nichtheizen entschieden. Bei Nichtheizen wird wiederum eine Pause von 1 s eingefügt. Dieser Ablauf wiederholt sich.

Im Einzelnen kann der Vergleich von Sollwert und Istwert in der digitalen Schaltungsanordnung 2.1 auch anderen Regelalgorithmen zugeführt werden, um den Heizstrom iH in dem Heizkreis 3 über das Steuerglied THY1 in Abhängigkeit von einem gewünschten zeitlichen Temperaturverhalten und/oder in Abhängigkeit von der Art des flexiblen Heizkörpers 1, beispielsweise einer Wärmedecke, einem Heizkissen oder Wärmeunterbett durchzuführen. Mit einem Mikrorechner oder Mikrocontroller kann ein geeigneter Regelalgorithmus leicht programmiert werden, wobei insbesondere auch Sicherheitsbestimmungen Rechnung getragen werden kann.

Eine Möglichkeit der Temperaturregelung besteht darin, eine Sollwertüberhöhung und eine geführte Sollwertreduzierung auf einen Nennwert zu verwirklichen. Bedingt durch die thermische Verzögerung des Anstiegs der Oberflächentemperatur des Heizkörpers 1 auf die Heizleitertemperatur infolge schlechter Wärmeleitung der Materialien des flexiblen Heizkörpers 1 ist es z.B. wünschenswert, den Temperaturanstieg zu verbessern. Eine Lösung hierzu bietet die Festlegung einer nach dem Einschalten der Heizvorrichtung zeitbedingten Erhöhung einer Sollwert-Temperatur. Um bei einem bereits vorgewärmten Heizkörper eine Überhöhung der Oberflächentemperatur zu erreichen, wird der Sollwert für die Regelung durch ein optimiertes Verfahren vorgegeben. Dies kann durch die Ermittlung der Differenz zwischen Sollwert und Istwert und einem davon abhängigen errechneten zeitweiligen Nachheizen nach Erreichen der Sollwert-Temperatur führen. Alternativ kann auch ein errechneter höherer Sollwert für die Regelung z.B. aus einem Soll- und Istwert-Temperaturvergleich festge-setzt werden. Ist also die Sollwert-/Istwert-Differenz beim Einschalten groß, so wird eine große Sollwertüberhöhung festgelegt. Die Überhöhung wird dann z.B. solange konstant oder verändert beibehalten, bis der Istwert mit dem überhöhten Sollwert übereinstimmt. Danach beginnt dann eine aus der Sollwertüberhöhung abgeleitete Temperaturabstufung. Auf diese Weise ergibt sich der Vorteil, dass die Oberflächentemperatur keinen Einbruch zeigt. Ist hingegen die Sollwert-/Istwert-Differenz beim Einschalten gleich wie bei einem laufenden Betrieb, so werden keine Sollwertüberhöhung und keine geführte Sollwertreduzierung auf Nennwert durchgeführt. Entsprechende Parameter für die Beurteilung der Sollwert-/Istwert-Differenz können in der digitalen Schaltungsanordnung 2.1 gespeichert werden. Je nach Art des flexiblen Heizkörpers 1, z.B. Heizkissen, Wärmeunterbetten oder Wärmedecken, kann dabei auch eine unterschiedliche Berechnungsmethode für die Sollwertüberhöhung vorgesehen werden. Dies kann z.B. durch Auswertung einer gespeicherten Software oder mittels programmierter Digitaleingänge oder aber durch zeitgesteuerte Zuschaltung oder Umschaltung auf eine andere Sollwertstufe realisiert werden.

Die bereits beschriebene Referenzmessung kann vorteilhaft zur Erkennung von Fehlern genutzt werden. Dazu kann der gemessene Referenzwert der Ladezeit mit dem Sollwert und/oder dem Istwert verglichen werden und anhand des Vergleichsergebnisses aufgrund vorbekannter bzw. gespeicherter oder eingegebener Werte ein Fehler der Elektronik, z.B. Kurzschluss in dem Steuerglied THY1 oder im Zusammenhang mit dem steuerbaren Schalter S3 erkannt werden. Aufgrund von Plausibilitätsvergleichen können die Fehler genau lokalisiert und zur Anzeige gebracht werden. Die Anzeige kann von einer einfachen Leuchtanzeige bis zu einer variablen Displayanzeige ausgelegt werden, wobei die Ansteuerung mittels der digitalen Schaltungsanordnung 2.1 unterschiedlich, z.B. als blinkende Warnanzeige oder auch akustisch ausgebildet sein kann.

Die Abschaltung der Heizvorrichtung kann mittels einfacher oder mehrfacher Zeitschaltung erfolgen, wobei Abschaltzeiten fest oder separat schaltbar integriert sein können. Bei längerem Betrieb kann eine Temperaturabsenkung durch entsprechende Programmierung der digitalen Schaltungsanordnung 2.1 vorgesehen sein, um Hautverbrennungen durch dauernd hohe Oberflächentemperaturen des Heizkörpers zu vermeiden. Hierzu kann ab einer bestimmten Sollwert-Temperatur eine zeitabhängige Sollwertabstufung oder sogar Abschaltung der Heizung vorgesehen sein.

Mittels der Anzeigevorrichtung, vorliegend beispielsweise als Anzeigeeinheit LED angegeben, können die verschiedenen Betriebszustände der Heizvorrichtungen, z.B. Sollwertreduzierung, Zeitabschaltung oder dgl. einem Benutzer auf vielfältige Weise, z.B. mittels Farbe, Ziffern, Symbolen, Texten oder dgl. angezeigt werden. Dabei können Blinkbetrieb, wechselnde Farben, Flash-Anzeige oder ähnliches vorgesehen sein und auch eine Ton-, Sprach- oder Vibrationsanzeige realisiert werden. Ein Vibrationsalarm kann beispielsweise im Heizkörper oder einem Schnurschalter bis zum Absenken der Sollwert-Temperatur vorgesehen sein, um z.B. durch wiederkehrenden Betrieb ein Einschlafen des Benutzers während kritischer Phasen zu vermeiden.

## Patentansprüche

1. Heizvorrichtung mit einer in einem flexiblen Heizkörper (1) integrierten und über sin Anschlusskabel an eine Versorgungsspannung (UV) anschließbaren elektrischen Heizleiteranordnung (1.1), einem mit dieser und weiteren Elementen einschließlich einem Steuerglied (THY1) für einen Heizstrom (iH) gebildeten Heizkreis (3) und mit einer zum Variieren des Heizstroms (iH) und Regeln der Temperatur an das Steuerglied (3) angeschlossenen Ansteuerschaltung (2) mit Regelkreis, wobei die Ansteuerung des Steuerglieds in Abhängigkeit einer Abweichung zwischen einem Istwert und einem Sollwert erfolgt, wobei die Ansteuerschaltung (2) des weiteren zum Abgreifen einer von der Temperatur der Heizleiteranordnung (1.1) abhängigen elektrischen Messgröße (u21) - Strom oder Spannung - über einen Koppelzweig (5) an den Heizkreis (3) gekoppelt ist und der Regelkreis eine Digitalisierstufe (2.11) einer digitalen Schaltungsanordnung (2.1) aufweist und wobei die Ansteuerschaltung (2) derart ausgebildet ist, dass die Ansteuerung des Steuerglieds (THY1) zum Einregeln einer eingestellten Temperatur des Heizkörpers (1) auf der Grundlage von in der Digitalisierstufe (2.11) gebildeten digitalen Daten erfolgt,
**dadurch gekennzeichnet,**
**dass** die Messgröße (u21) über einen Zuführzweig (5) der Digitalisierstufe (2.11) zum Bilden eines digitalen Istwertes mittelbar über ein der Digitalisierstufe (2.11) vorgeschaltetes analoges Zeitglied mit einer Widerstands-/Kondensatorschaltung (R7, C6) zugeführt ist.

2. Heizvorrichtung nach Anspruch 1,
**dadurch gekennzeichnet,**
**dass** die Messgröße (u21) mittels eines im Heizkreis (3) gebildeten Spannungsteilers abgegriffen ist, der einerseits mit der einen temperaturabhängigen Widerstand bildenden Heizleiteranordnung (1.1) und andererseits mit mindestens einem Widerstandselement (R21) gebildet ist.

3. Heizvorrichtung nach Anspruch 1 oder 2,
**dadurch gekennzeichnet,**
**dass** die Digitalisierstufe (2.11) zum Bilden des digitalen Istwertes ein Zeitmessglied aufweist und der digitale Istwert einem Istzeitwert bis zum Erreichen einer vorgegebenen oder vorgebbaren Ladespannung des Kondensators (C6) entspricht,
**dass** in der Digitalisierstufe (2.11) als Sollwert ein Sollzeitwert vorgegeben oder vorgebbar ist, und
**dass** zum Heizen die Ansteuerung des Steuerglieds (THY1) in Abhängigkeit von einer Abweichung des Istzeitwertes von dem Sollzeitwert erfolgt.

4. Heizvorrichtung nach einem der vorhergehenden Ansprüche,
**dadurch gekennzeichnet,**
**dass** der Kondensator (C6) mit seinem einen Anschluss über einen Ladewiderstand (R7) an einen Pol der Versorgungsspannung (UV) und mit seinem anderen Anschluss über den Koppelzweig (5) an den Heizkreis (3) gekoppelt ist und
**dass** zum Erfassen der Messgröße (u21) und Bilden des Istwertes das Steuerglied (THY1) mittels der digitalen Schaltungsanordnung (2.1) angesteuert ist.

5. Heizvorrichtung nach einem der vorhergehenden Ansprüche,
**dadurch gekennzeichnet,**
**dass** der Kondensator (C6) über einen Gleichrichter (D2) an die Versorgungsspannung (UV) angeschlossen ist.

6. Heizvorrichtung nach einem der vorhergehenden Ansprüche,
**dadurch gekennzeichnet,**
**dass** zum Bilden des Sollwertes das Steuerglied (THY1) in seinen den Heizkreis unterbrechenden nicht angesteuerten Zustand gebracht ist und der andere Anschluss des Kondensators (C6) zum Abgreifen einer entsprechend einer gewünschten Temperatur einstellbaren Teilspannung und zum Bilden des Sollwertes aus dieser an einen weiteren Spannungsteiler (8) angeschlossen ist.

7. Heizvorrichtung nach Anspruch 6,
**dadurch gekennzeichnet,**
**dass** der Abgriff der Teilspannung mittels eines zeitweilig über die digitale Schaltungsanordnung (2.1) angesteuerten Schaltglieds (S3) erfolgt und dass der gebildete Sollwert und/oder der gebildete Istwert zum Durchführen eines Soll-/Istwertvergleichs in der digitalen Schaltungsanordnung (2.1) abgespeichert wird/werden.

8. Heizvorrichtung nach einem der vorhergehenden Ansprüche,
**dadurch gekennzeichnet,**
**dass** die digitale Schaltungsanordnung (2.1) zum Erzeugen eines Referenzwertes als gemeinsame Bezugsgröße für den Sollwert und den Istwert ausgebildet ist.

9. Heizvorrichtung nach Anspruch 8,
**dadurch gekennzeichnet,**
**dass** zum Bilden des Referenzwertes das Steuerglied (THY1) und das Schaltglied (S3) in ihren Unterbrechungszustand gebracht sind und der über den einen und anderen Anschluss mit der digitalen Schaltungsanordnung (2.1) verbundene Kondensator (C6) mittels dieser zur Durchführung der Referenzmessung entladbar ist und anschließend über den Ladezweig (7), den Koppelzweig (5) und das Widerstandselement (R21) des Heizkreises (3) geladen wird und dabei die bis zum Erreichen der Ladespannung des Kondensators (C6) mit dem Zeitmessglied der digitalen Schaltungsanordnung (2.1) gemessene Zeit als Referenzwert gespeichert wird.

10. Heizvorrichtung nach Anspruch 9,
**dadurch gekennzeichnet,**
**dass** die digitale Schaltungsanordnung (2.1) derart ausgebildet ist, dass zur Temperaturregelung zunächst der Referenzwert während einer Versorgungshalbwelle ermittelt und anschließend während jeweils weiterer Halbwellen der Sollwert und der Istwert bestimmt und aufgrund des Vergleichs von Sollwert und lstwert die Temperatur eingeregelt wird und nach einer Pausenzeit, in der die Ansteuerung des Steuerglieds (THY1) unterbrochen ist, die genannten Schritte von der Referenzwertbildung bis zur Pausenzeit zyklisch wiederholt werden.

## Claims

1. Heating device comprising:
- an electrical heat conductor arrangement (1.1) which is integrated into a flexible heating element (1) and can be connected to a supply voltage (UV) via a connection cable,
- a heating circuit (3), formed with this heat conductor arrangement and additional elements including a control member (THY1) for a heating current (iH), and
- a triggering circuit (2) which has a control loop and is connected to the control member (3) in order to vary the heating current (iH) and regulate the temperature, the control member being triggered in dependence on a deviation between an actual value and a set value, the triggering circuit (2) being furthermore coupled to the heating circuit (3) via a coupling branch (5) in order to pick up an electric measured variable (u21) - current or voltage - which varies according to the temperature of the heat conductor arrangement (1.1), and the control loop having a digitising stage (2.11) of a digital circuit arrangement (2.1), and the triggering circuit (2) being so designed that the control member (THY1) is triggered for adjusting a set temperature of the heating element (1) on the basis of digital data formed in the digitising stage (2.11),
**characterised in that**
the measured variable (u21) is supplied via a feed branch (5) to the digitising stage (2.11) for forming a digital actual value indirectly via an analogue time function element which is arranged upstream of the digitising stage (2.11) and has a resistor/capacitor circuit (R7, C6).

2. Heating device according to claim 1,
**characterised in that**
the measured variable (u21) is picked up by means of a voltage divider formed in the heating circuit (3) which is formed on the one hand by the heat conductor arrangement (1.1) which forms a temperature-dependent resistor and on the other hand by at least one resistor element (R21).

3. Heating device according to claim 1 or 2,
**characterised in that**
the digitising stage (2.11) has a time-measuring element for forming the digital actual value, and the digital actual value corresponds to an actual time value until a preset or presettable charge voltage of the capacitor (C6) is reached,
**in that** a set time value is preset or presettable in the digitising stage (2.11) as the set value, and
**in that,** for heating, the control member (THY1) is triggered in dependence on a deviation of the actual time value from the set time value.

4. Heating device according to one of the preceding claims, **characterised in that**
one connector of the capacitor (C6) is coupled via a charging resistor (R7) to a pole of the supply voltage (UV) and the other connector is coupled to the heating circuit (3) via the coupling branch (5), and
**in that**, for detecting the measured variable (u21) and forming the actual value, the control member (THY1) is triggered by means of the digital circuit arrangement (2.1).

5. Heating device according to one of the preceding claims, **characterised in that**
the capacitor (C6) is connected to the supply voltage (UV) via a rectifier (D2).

6. Heating device according to one of the preceding claims, **characterised in that**
for forming the set value, the control member (THY1) is brought into its non-triggered state which interrupts the heating circuit, and the other connector of the capacitor (C6) is connected to a further voltage divider (8) for picking up a component voltage which can be set to a desired temperature and for forming the set value from the component voltage.

7. Heating device according to claim 6,
**characterised in that**
the component voltage is picked up by means of a switching member (S3), which is temporarily triggered via the digital circuit arrangement (2.1), and
**in that** the formed set value and/or the formed actual value is/are stored for performing a set value/actual value comparison in the digital circuit arrangement (2.1).

8. Heating device according to one of the preceding claims, **characterised in that**
the digital circuit arrangement (2.1) is designed to generate a reference value as a common reference quantity for the set value and the actual value.

9. Heating device according to claim 8,
**characterised in that**
for forming the reference value, the control member (THY1) and the switching member (S3) are brought into their interrupted state and the capacitor (C6), which is connected to the digital circuit arrangement (2.1) via the one and the other connector, is dischargeable by means of the digital circuit arrangement for performing the reference measurement and is then charged via the charging branch (7), the coupling branch (5) and the resistor element (R21) of the heating circuit (3) and in this process the time taken to reach the charge voltage of the capacitor (C6), as measured by the time-measuring member of the digital circuit arrangement (2.1), is stored as the reference value.

10. Heating device according to claim 9,
**characterised in that**
the digital circuit arrangement (2.1) is designed in such a way that, for temperature regulation, first the reference value is determined during a supply half-wave and then the set value and the actual value are determined during respective further half-waves and the temperature is adjusted on the basis of a comparison of the set value and the actual value, and after an intermission, in which the triggering of the control member (THY1) is interrupted, the mentioned steps from the reference value formation up to the intermission are cyclically repeated.

## Revendications

1. Dispositif de chauffage avec un dispositif à conducteur chauffant électrique (1.1) intégré dans un corps de chauffe flexible (1) et raccordable par un câble de raccordement à une tension d'alimentation (UV), un circuit de chauffage (3) formé de celui-ci et d'autres éléments incluant un organe de commande (THY 1) pour un courant de chauffage (iH) et avec un circuit de commande (2) avec circuit de régulation raccordé à l'organe de commande (3) pour faire varier le courant de chauffage (iH) et régler la température, dans lequel l'organe de commande est commandé en fonction d'un écart entre une valeur réelle et une valeur de consigne, dans lequel le circuit de commande (2) est de surcroît couplé au circuit de chauffage (3) par une branche de couplage (5) pour la saisie d'une grandeur de mesure (u21) électrique - courant ou tension - dépendante de la température du dispositif à conducteur chauffant (1.1) et le circuit de régulation présente un étage de numérisation (2.11) d'un dispositif de circuit numérique (2.1) et dans lequel le circuit de commande (2) est conçu de telle manière que la commande de l'organe de commande (THY1) pour ajuster une température à laquelle le corps de chauffe (1) a été réglé est réalisée sur la base de données numériques formées dans l'étage de numérisation (2.11),
**caractérisé par le fait**
**que** la grandeur de mesure (u21) est amenée à l'étage de numérisation (2.11) par une branche d'amenée (5) pour former une valeur réelle numérique par l'intermédiaire d'un organe de temporisation analogique placé en amont de l'étage de numérisation (2.11) et composé d'un circuit résistance/condensateur (R7, C6).

2. Dispositif de chauffage selon la revendication 1,
**caractérisé par le fait**
**que** la grandeur de mesure (u21) est saisie au moyen d'un diviseur de tension formé dans le circuit de chauffage (3) qui est formé, d'une part, du dispositif à conducteur chauffant (1.1) formant une résistance variable avec la température et, d'autre part, d'au moins un élément de résistance (21).

3. Dispositif de chauffage selon la revendication 1 ou 2,
**caractérisé par le fait**
**que** l'étage de numérisation (2.11) utilisé pour former la valeur réelle numérique présente un organe de mesure du temps et la valeur réelle numérique correspond à une valeur réelle de temps jusqu'à l'atteinte d'une tension de charge définie ou définissable du condensateur (C6),
**qu'**une valeur de consigne de temps est définie ou définissable en tant que valeur de consigne dans l'étage de numérisation (2.11) et
**que**, pour le chauffage, l'organe de commande (THY1) est commandé en fonction d'un écart entre la valeur réelle de temps et la valeur de consigne de temps.

4. Dispositif de chauffage selon l'une des revendications précédentes,
**caractérisé par le fait**
**que** le condensateur (C6) est couplé par une de ses connexions à un pôle de la tension d'alimentation (UV) par l'intermédiaire d'une résistance de charge (R7) et par son autre connexion au circuit de chauffage (3) par l'intermédiaire de la branche de couplage (5) et
**que** l'organe de commande (THY1) est commandé au moyen du dispositif de circuit numérique (2.1) pour la saisie de la grandeur de mesure (u21) et la formation de la valeur réelle.

5. Dispositif de chauffage selon l'une des revendications précédentes,
**caractérisé par le fait**
**que** le condensateur (C6) est relié à la tension d'alimentation (UV) par l'intermédiaire d'un redresseur (D2).

6. Dispositif de chauffage selon l'une des revendications précédentes,
**caractérisé par le fait**
**que**, pour la formation de la valeur de consigne, l'organe de commande (THY1) est mis dans son état non activé, interrompant le circuit de chauffage, et l'autre connexion du condensateur (C6) est reliée à un autre diviseur de tension (8) pour la saisie d'une tension partielle correspondant à une température souhaitée et pour la formation de la valeur de consigne à partir de celle-ci.

7. Dispositif de chauffage selon la revendication 6,
**caractérisé par le fait**
**que** la tension partielle est saisie au moyen d'un organe de commutation (S3) commandé temporairement par le dispositif de circuit numérique (2.1) et que la valeur de consigne formée et/ou la valeur réelle formée est/sont mémorisée(s) dans le dispositif de circuit numérique (2.1) pour la réalisation d'une comparaison valeur de consigne/valeur réelle.

8. Dispositif de chauffage selon l'une des revendications précédentes,
**caractérisé par le fait**
**que** le dispositif de circuit numérique (2.1) est conçu pour générer une valeur de référence servant de grandeur de référence commune pour la valeur de consigne et la valeur réelle.

9. Dispositif de chauffage selon la revendication 8,
**caractérisé par le fait**
**que**, pour la formation de la valeur de référence, l'organe de commande (THY1) et l'organe de commutation (S3) sont mis dans leur état ouvert et que le condensateur (C6) relié au dispositif de circuit numérique (2.1) par l'une ou l'autre de ses connexions peut être déchargé par celui-ci en vue de réaliser la mesure de référence et ensuite chargé via la branche de charge (7), la branche de couplage (5) et l'élément de résistance (R21) du circuit de chauffage (3) et que l'on mémorise à cette occasion en tant que valeur de référence le temps mesuré avec l'organe de mesure de temps du dispositif de circuit numérique (2.1) jusqu'à l'atteinte de la tension de charge du condensateur (C6).

10. Dispositif de chauffage selon la revendication 9,
**caractérisé par le fait**
**que** le dispositif de circuit numérique (2.1) est conçu de telle manière que, pour la régulation de température, on détermine d'abord la valeur de référence pendant une demi-onde d'alimentation et ensuite la valeur de consigne et la valeur réelle pendant les demi-ondes suivantes et on ajuste la température sur la base de la comparaison de la valeur de consigne et de la valeur réelle et, après un temps de pause pendant lequel la commande de l'organe de commande (THY1) est interrompue, on répète cycliquement les étapes indiquées de la formation de la valeur de référence jusqu'au temps de pause.
